# EUROPEAN PATENT APPLICATION

(11) **EP 4 769 506 A1**
(43) Date of publication of application: **01.07.2026**
(21) Application number: 24869563.7
(22) Date of filing: 26.01.2024
(51) Int. Cl.: H01M 4/13, H01M 50/46

(54) **ELECTRODE ASSEMBLY, BATTERY CELL, BATTERY AND ELECTRICAL DEVICE**

(30) Priority: 28.09.2023 CN 202322662392 U
(71) Applicant: Contemporary Amperex Technology Co., Limited, Ningde, Fujian 352100 (CN)
(72) Inventor: LUO, Zhongping, Ningde, Fujian 352100 (CN); WANG, Song, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); DING, Yu, Ningde, Fujian 352100 (CN); KONG, Pan, Ningde, Fujian 352100 (CN)
(74) Representative: Gong, Jinping
(86) International application number: PCT/CN2024/074184
(87) International publication number: WO 2025/065991

(57) **Abstract**

Provided are an electrode assembly (20), a battery cell (100), a battery (200) and an electrical device (1000). The electrode assembly (20) comprises a first electrode plate (21), a second electrode plate (22) and a separator (23). The second electrode plate (22) is stacked with the first electrode plate (21) in the thickness direction of the first electrode plate (21), and the polarity of the second electrode plate (22) is opposite to that of the first electrode plate (21). The separator (23) isolates the first electrode plate (21) from the second electrode plate (22), and is stacked with the first electrode plate (21) in the thickness direction of the first electrode plate (21). The separator (23), the first electrode plate (21) and the second electrode plate (22) are wound to form a whole. At a starting end (201) and/or an ending end (202) of the winding of the electrode assembly (20), at least one of the first electrode plate (21) and the second electrode plate (22) is fixed to the separator (23) by means of a connector (24).

## Description

### PRIORITY INFORMATION

The present application claims priority to and benefits of patent application No. 202322662392.5 filed with the China National Intellectual Property Administration on September 28, 2023, which is incorporated herein by reference in its entirety.

### TECHNICAL FIELD

The present application relates to the technical field of batteries, and in particular to an electrode assembly, a battery cell, a battery, and an electrical device.

### BACKGROUND

With the development of the battery industry, batteries are used more and more widely, and the safety issues of batteries have attracted attention. In the related art, the battery cell comprises an electrode assembly, the electrode assembly comprises a positive electrode plate, a negative electrode plate and a separator, and the separator isolates the positive electrode plate from the negative electrode plate. In order to reduce the probability of the positive electrode plate and the negative electrode plate slipping relative to the separator and causing a short circuit, the length of the separator is generally long to cover the positive electrode plate and the negative electrode plate. However, a long separator results in a waste of material.

### SUMMARY OF THE INVENTION

The present application provides an electrode assembly, a battery cell, a battery and an electrical device, which can solve the problem of material waste caused by the long separator of the electrode assembly.

The electrode assembly of an embodiment of the present application comprises a first electrode plate, a second electrode plate and a separator, the second electrode plate is stacked with the first electrode plate in the thickness direction of the first electrode plate, and the polarity of the second electrode plate is opposite to that of the first electrode plate; the separator isolates the first electrode plate from the second electrode plate and is stacked with the first electrode plate in the thickness direction of the first electrode plate.

The separator, the first electrode plate and the second electrode plate are wound to form a whole, and at a starting end and/or an ending end of the winding of the electrode assembly, at least one of the first electrode plate and the second electrode plate is fixed to the separator by means of a connector.

In the electrode assembly of the embodiment of the present application, at the starting end and/or the ending end of the winding of the electrode assembly, at least one of the first electrode plate and the second electrode plate is fixed to the separator by means of the connector, so that at least one of the first electrode plate and the second electrode plate will not slip relative to the separator, and it is difficult for the first electrode plate and the second electrode plate to have a short circuit. Therefore, there is no need to arrange a long separator at the starting end and/or the ending end of the electrode assembly, thereby improving the utilization rate of the separator material and reducing the waste of the separator material.

In some embodiments, the connector comprises an adhesive, and at least one of the first electrode plate and the second electrode plate is fixed to the separator by means of the adhesive. In this way, the adhesive is easy to obtain, which makes the cost of the electrode assembly lower. In addition, the adhesive is sticky, which can make the connection between the electrode plate and the separator more stable.

In some embodiments, the adhesive bonds the first electrode plate and the separator in the thickness direction of the separator, and/or the adhesive bonds the second electrode plate and the separator in the thickness direction of the separator. In this way, the bonding area of the adhesive is larger, which is conducive to more stable bonding of the electrode plate and the separator by the adhesive.

In some embodiments, the adhesive is symmetrically arranged about the center in the width direction of the electrode plate bonded to the separator. In this way, the adhesive extends from the center of the electrode plate in the width direction to the two edges, making the bonding force between the separator and the electrode plate more uniform, which is conducive to more stable bonding of the electrode plate and the separator.

In some embodiments, the width of the adhesive is a first width, the width of the electrode plate bonded to the separator is a second width, and the ratio of the first width to the second width is in the range of 0.5-1. In this way, the width of the adhesive bonding the separator and the electrode plate is large, which is conducive to stable bonding of the electrode plate and the separator by the adhesive.

In some embodiments, in the length direction of the electrode plate bonded to the separator, the length of the adhesive is in the range of 2 mm - 100 mm. In this way, within the above range, the bonding force formed by the adhesive can stably bond the electrode plate and the separator, and the area of the separator blocked is small, which has little effect on the chemical reaction between the first electrode plate and the second electrode plate.

In some embodiments, the thickness of the adhesive is less than 20 µm. In this way, when the bonding force of the adhesive is sufficient, the thickness of the adhesive is small, which has little effect on the air permeability of the separator, and thus has little effect on the chemical reaction between the first electrode plate and the second electrode plate.

In some embodiments, the electrode plate bonded to the separator comprises a current collector and a coating layer, the coating layer is stacked on the current collector, a starting end and/or an ending end of the winding of the coating layer form a groove away from the current collector, and the adhesive is at least partially accommodated in the groove. In this way, the adhesive is at least partially accommodated in the groove, so that the surfaces of the starting end and the ending end of the winding of the electrode assembly are relatively smooth, thereby reducing the probability of interference between the electrode assembly and other components.

In some embodiments, the number of the separators is two, one of the first electrode plate and the second electrode plate is clamped between the two separators, and at the starting end and/or the ending end of the winding of the electrode assembly, the two separators are both fixed to the clamped electrode plate by means of the connector. In this way, the two separators are both fixed to the clamped electrode plate by means of the connector, which can further stabilize the relative position of the clamped electrode plate and the separator, reducing the risk of short circuit between the first electrode plate and the second electrode plate.

In some embodiments, the electrode assembly comprises an adhesive tape, and at the starting end and/or the ending end of the winding of the electrode assembly, the electrode plate other than the clamped electrode plate is connected to the adjacent separator by means of the adhesive tape. In this way, the position of the electrode plate other than the clamped electrode plate can be fixed, so that the positions of the two electrode plates are accurate, the phenomenon of lithium precipitation in the electrode assembly is reduced, and the safety of the electrode assembly is improved.

The battery cell of an embodiment of the present application comprises the electrode assembly of any of the above embodiments.

The battery of an embodiment of the present application comprises the battery cell of any of the above embodiments.

The electrical device of an embodiment of the present application comprises the battery cell of any of the above embodiments or the battery of the above embodiment.

Additional aspects and advantages of the present application will be partially given in the following description, and will partially become apparent from the following description, or will be understood from the practice of the present application.

### BRIEF DESCRIPTION OF DRAWINGS

The above and/or additional aspects and advantages of the present application will become apparent and understandable from the description of the embodiments in conjunction with the drawings below, in which:
FIG. 1 is a schematic structural view of an electrical device provided in some embodiments of the present application;
FIG. 2 is a schematic structural view of a battery provided in some embodiments of the present application;
Fig. 3 is an exploded schematic view of a battery cell provided in some embodiments of the present application;
FIG. 4 is a schematic structural view of an electrode assembly provided in some embodiments of the present application;
FIG. 5 is an enlarged schematic view of portion A of the electrode assembly in FIG. 4;
Fig. 6 is a schematic view showing an electrode plate matched with an adhesive provided in some embodiments of the present application;
FIG. 7 is a three-dimensional structural view of an electrode assembly provided in some embodiments of the present application;
FIG. 8 is an enlarged schematic view of portion B of the electrode assembly in FIG. 7;
FIG. 9 is a three-dimensional structural view of an electrode assembly provided in some embodiments of the present application; and
FIG. 10 is an enlarged schematic view of portion C of the electrode assembly in FIG. 9.

Descriptions of reference numerals:
1000-Electrical device, 200-Battery, 300-Controller, 400-Motor, 100-Battery cell, 10-Case, 20-Electrode assembly, 21-First electrode plate, 211-Current collector, 212-Coating layer, 213-Groove, 22-Second electrode plate, 23-Separator, 201-Starting end, 202-Ending end, 24-Connector, 241-Adhesive, Adhesive Tape 25.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meaning of the above terms in embodiments the present application may be understood on a case-by-case basis.

At present, from the development of the market situation, the application of batteries is becoming increasingly more extensive. Batteries are not only used in energy storage power systems such as hydropower, thermal power, wind power, and solar power stations, but also widely used in electric vehicles such as electric bicycles, electric motorcycles, and electric vehicles, as well as aerospace and other fields. With the continuous expansion of the application field of batteries, the market demand thereof is also constantly expanding.

The battery cell comprises an electrode assembly, the electrode assembly comprises a positive electrode plate, a negative electrode plate and a separator. The electrode assembly can be wound to form a whole. During the winding process of the electrode assembly, at a starting end and an ending end of the winding of the electrode assembly, at least one of the positive electrode plate and the negative electrode plate is easy to slip relative to the separator, thereby making the positive electrode plate and the negative electrode plate to exceed the edge of the separator and cause a short circuit. In order to reduce the probability of the positive electrode plate and the negative electrode plate slipping relative to the separator to cause a short circuit, the separator is generally set to have a longer length exceeding the edge of the electrode plate at the starting end and the ending end of the winding, so that even if at least one of the positive electrode plate and the negative electrode plate is easy to slip relative to the separator, the positive electrode plate and the negative electrode plate will not exceed the edge of the separator. However, a longer separator length is likely to cause material waste.

In order to solve the problem that the longer length of the separator is easy to cause material waste, at the starting end and/or the ending end of the winding of the electrode assembly, at least one of the first electrode plate and the second electrode plate is fixed to the separator by means of a connector, so that at least one of the first electrode plate and the second electrode plate will not slip relative to the separator, and it is difficult for the first electrode plate and the second electrode plate to have a short circuit. Therefore, there is no need to arrange a long separator at the starting end and/or the ending end of the electrode assembly, thereby improving the utilization rate of the separator material and reducing the waste of the separator material.

It should be noted that, in the present application, "electrode plate" may refer to the first electrode plate or the second electrode plate. One of the first electrode plate and the second electrode plate is the positive electrode plate, and the other one is the negative electrode plate.

The electrical device according to the embodiments of the present application comprises the battery cell or battery according to any of the following embodiments. Specifically, an electrical device can use a battery or a battery cell as a power source, and the electrical device may be, but is not limited to, a mobile phone, a tablet personal computer, a laptop computer, an electric toy, an electric tool, a battery car, an electric vehicle, a ship, a spacecraft, and the like. The electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

The following embodiment, for the convenience of illustration, takes an electrical device 1000 in an embodiment of the present application being a vehicle as an example.

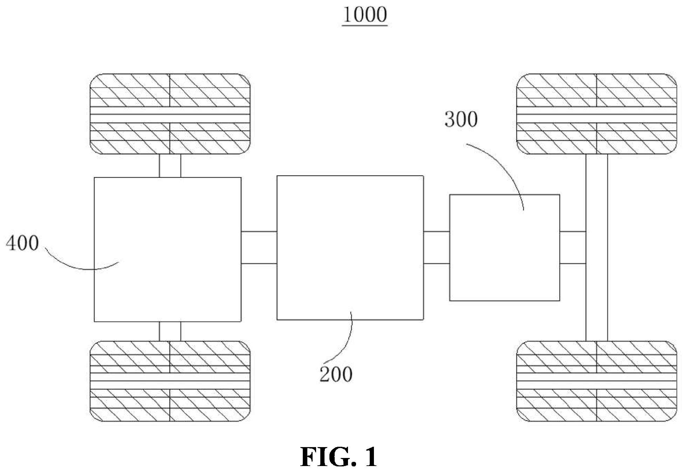

Referring to FIG. 1, FIG. 1 is a schematic structural view of an electrical device 1000 provided in some embodiments of the present application. A battery 200 is provided inside the vehicle and the battery 200 may be arranged at the bottom or head or tail of the vehicle. The battery 200 may be configured to supply power to the vehicle. For example, the battery 200 may be used as an operating power source of the vehicle.

The vehicle may further include a controller 300 and a motor 400. The controller 300 is configured to control the battery 200 to supply power to the motor 400, for example, to meet a demand for working power during starting, navigation, and driving of the vehicle.

In an embodiment of the present application, the battery 200 may be used not only as an operating power source of the vehicle, but also as a driving power source of the vehicle, replacing or partially replacing fuel or natural gas to provide driving power for the vehicle.

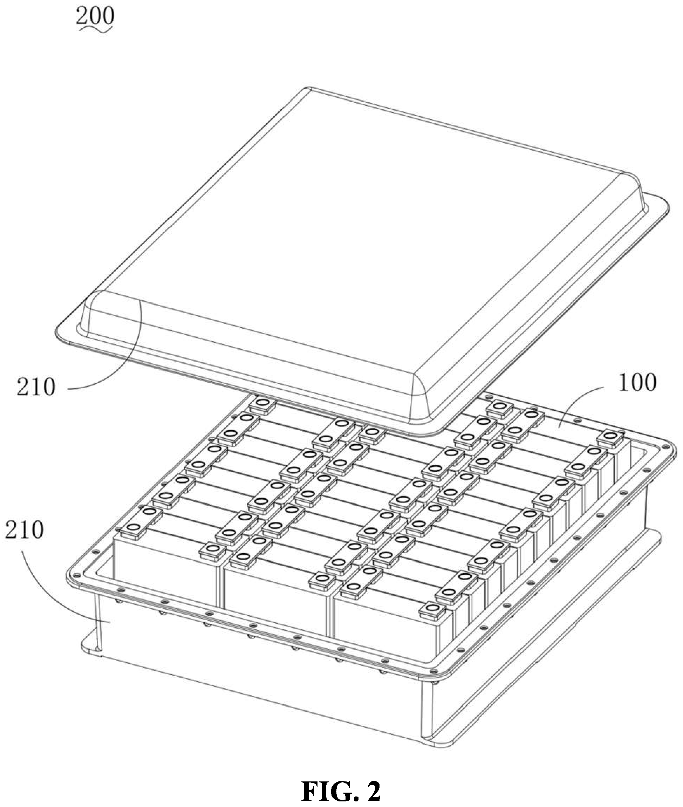

Referring to FIG. 2, FIG. 2 is a schematic structural view of a battery 200 provided in some embodiments of the present application. The battery 200 of the embodiment of the present application comprises the battery cell 100 of any of the following embodiments. In this way, since the electrode assembly can be effectively wetted in the battery cell and the function of the insulating film will not be greatly affected, the battery of the embodiment of the present application has good performance and can operate continuously and stably in a safe environment.

In the embodiments of the present application, the battery cell 100 may include a lithium-ion secondary battery, a lithium-ion battery, a lithium-sulfur battery, a sodium-lithium-ion battery, a sodium-ion battery, a magnesium-ion battery, or the like, which is not limited in the embodiments of the present application. The battery cell 100 may be in a cylindrical shape, a flat shape, a cuboid shape, or other shapes, which is also not limited in the embodiments of the present application. The battery cells 100 are generally classified into three types depending on the way of encapsulation: cylindrical battery cells, prismatic battery cells and pouch battery cells, which is not limited in the embodiments of the present application either.

The battery 200 generally comprises a battery box 210 for encapsulating one or more battery cells 100. A plurality of batteries can be accommodated in the battery box 210. The battery box 210 can prevent liquids or other foreign substances from affecting the charging or discharging of the battery cells 100. The battery box 210 serves as a carrier of the battery module and plays a key role in the safe operation and protection of the battery module. The battery box 210 must meet the strength and stiffness requirements and the protection level requirements of the electrical equipment shell, while providing protection against collision. The shape of the battery box 210 can be a cuboid, a cube, or the like. The battery box 210 can be cast with materials such as steel plates and aluminum alloys; it can also be made of new lightweight materials such as glass fiber reinforced composite materials and carbon fiber reinforced composite materials.

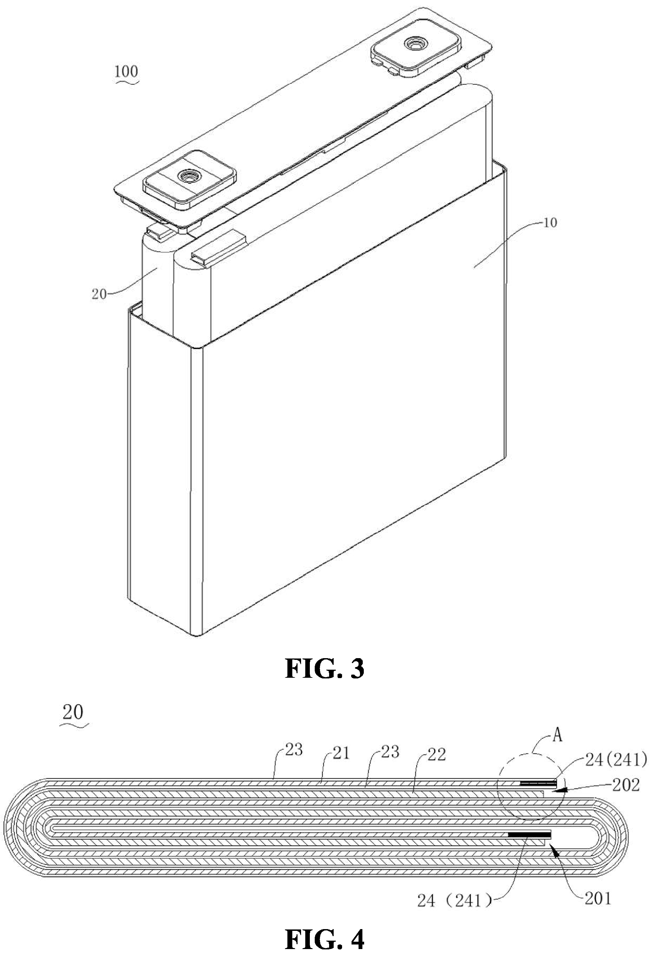

Referring to FIG. 3, FIG. 3 is an exploded view of a battery cell 100 provided in some embodiments of the present application. In some embodiments, the battery cell 100 comprises a case 10 and an electrode assembly 20, and the electrode assembly 20 is disposed in the case 10.

The electrode assembly 20 is a component where electrochemical reactions occur within the battery cell 100. The case 10 of the battery cell 100 may contain one or more electrode assemblies 20 inside.

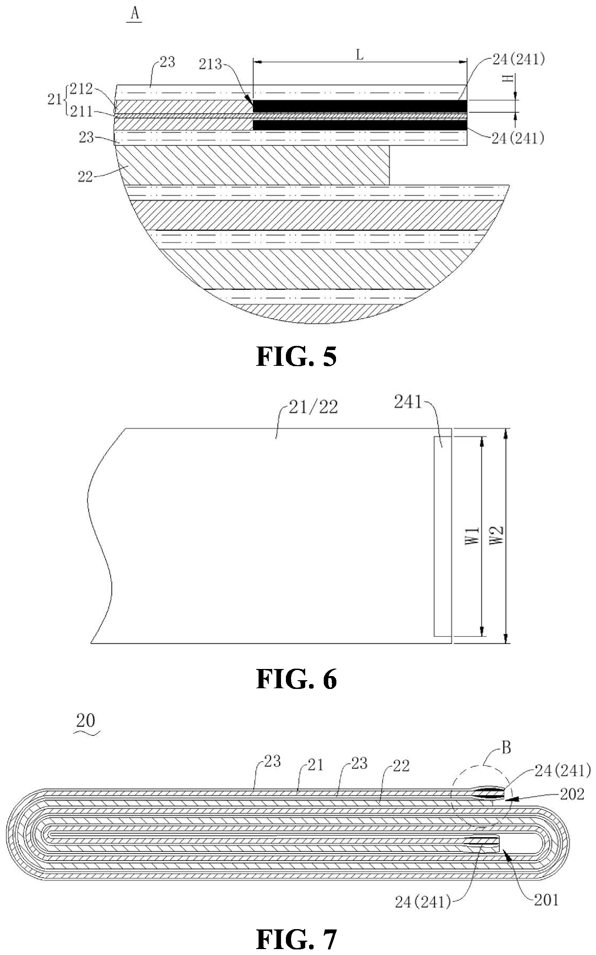

Referring to FIGS. 4 and 5, FIG. 4 is a schematic structural view of an electrode assembly 20 provided in some embodiments of the present application. FIG. 5 is an enlarged schematic view of portion A of the electrode assembly in FIG. 4. The electrode assembly 20 of the embodiment of the present application comprises a first electrode plate 21, a second electrode plate 22 and a separator 23, the second electrode plate 22 is stacked with the first electrode plate 21 in the thickness direction of the first electrode plate 21, and the polarity of the second electrode plate 22 is opposite to that of the first electrode plate 21; the separator 23 isolates the first electrode plate 21 from the second electrode plate 22 and is stacked with the first electrode plate 21 in the thickness direction of the first electrode plate 21.

The separator 23, the first electrode plate 21 and the second electrode plate 22 are wound to form a whole, and at a starting end 201 and/or an ending end 202 of the winding of the electrode assembly 20, at least one of the first electrode plate 21 and the second electrode plate 22 is fixed to the separator 23 by means of a connector 24.

Specifically, the first electrode plate 21 and the second electrode plate 22 are two electrode plates that are opposite in polarity. In a charging or discharging process of the battery cell 100, the positive active material and the negative active material react with the electrolytic solution.

The separator 23 isolates the first electrode plate 21 from the second electrode plate 22. That is, the separator 23 is provided between the first electrode plate 21 and the second electrode plate 22. The first electrode plate 21 and the second electrode plate 22 are separated from each other and do not contact each other, thereby reducing the risk of short circuit between the first electrode plate 21 and the second electrode plate 22.

The first electrode plate 21, the second electrode plate 22 and the separator 23 are stacked with each other in their respective thickness directions. The separator 23, the first electrode plate 21 and the second electrode plate 22 are wound into a cylindrical shape, or may be wound into a substantially square shape.

In one example, at the starting end 201 of the winding of the electrode assembly 20, at least one of the first electrode plate 21 and the second electrode plate 22 is fixed to the separator 23 by means of the connector 24.

In another example, at the ending end 202 of the winding of the electrode assembly 20, at least one of the first electrode plate 21 and the second electrode plate 22 is fixed to the separator 23 by means of the connector 24.

In yet another example, at the starting end 201 and the ending end 202 of the winding of the electrode assembly 20, at least one of the first electrode plate 21 and the second electrode plate 22 is fixed to the separator 23 by means of the connector 24.

In this way, at the starting end 201 and/or the ending end 202 of the winding of the electrode assembly 20, at least one of the first electrode plate 21 and the second electrode plate 22 is fixed to the separator 23 by means of the connector 24, so that at least one of the first electrode plate 21 and the second electrode plate 22 will not slip relative to the separator 23, and it is difficult for the first electrode plate 21 and the second electrode plate 22 to have a short circuit. Therefore, there is no need to arrange a long separator 23 at the starting end 201 and/or the ending end 202 of the electrode assembly 20, thereby improving the utilization rate of the material of the separator 23 and reducing the waste of the material of the separator 23.

In some embodiments, the connector 24 comprises an adhesive 241, and at least one of the first electrode plate 21 and the second electrode plate 22 is fixed to the separator 23 by means of the adhesive 241.

Specifically, the adhesive 241 is, for example, a double-faced adhesive tape, a glue formed after liquid solidification, or other adhesives 241. The adhesive 241 can be made of materials such as epoxy resin, phenolic resin, urea-formaldehyde resin, and polyurethane. It should be noted that the adhesive 241 may have a certain elasticity so that the adhesive 241 will not damage the electrode plate and the separator 23.

In one example, the adhesive 241 bonds the first electrode 21 and the separator 23. In another example, the adhesive 241 bonds the second electrode 22 and the separator 23. In yet another example, the first electrode plate 21 and the second electrode plate 22 are both bonded and fixed to the separator 23 by means of the adhesive 241.

In this way, the adhesive 241 is easily obtained, so that the manufacturing cost of the electrode assembly 20 is relatively low. In addition, the adhesive 241 is sticky, which can make the connection between the electrode plate and the separator 23 more stable.

In other embodiments, the connector 24 may include components such as pins, which may pass through the electrode plate and the separator 23 to fix the electrode plate and the separator 23 together.

In some embodiments, the adhesive 241 bonds the first electrode plate 21 and the separator 23 in the thickness direction of the separator 23, and/or the adhesive 241 bonds the second electrode plate 22 and the separator 23 in the thickness direction of the separator 23.

It can be understood that the separator 23 has a larger surface area in the thickness direction of the separator 23, and therefore the bonding area of the adhesive 241 is larger, which is conducive to more stable bonding of the electrode plate and the separator 23 by the adhesive 241.

In one example, when the separator 23 and the first electrode plate 21 are bonded together by the adhesive 241, the adhesive 241 bonds the first electrode plate 21 and the separator 23 in the thickness direction of the separator 23. In another example, when the separator 23 and the second electrode plate 22 are bonded together by the adhesive 241, the adhesive 241 bonds the second electrode plate 22 and the separator 23 in the thickness direction of the separator 23.

Referring to FIG. 6, in some embodiments, the adhesive 241 is symmetrically arranged about the center in the width direction of the electrode plate bonded to the separator 23. In one example, when the separator 23 and the first electrode plate 21 are bonded together by the adhesive 241, the adhesive 241 is symmetrically arranged about the center in the width direction of the first electrode plate 21. In another example, when the separator 23 and the second electrode plate 22 are bonded together by the adhesive 241, the adhesive 241 is symmetrically arranged about the center in the width direction of the second electrode plate 22.

The width direction of the electrode plate is a direction perpendicular to the thickness direction of the electrode plate, and the length direction of the electrode plate is perpendicular to the width direction of the electrode plate. Generally, the electrode assembly 20 is wound in the length direction of the electrode plate. Therefore, at the starting end 201 or the ending end of the winding of the electrode assembly 20, the width of the electrode plate is in an expanded state.

In this way, the adhesive 241 extends from the center of the electrode plate in the width direction to the two edges, making the bonding force between the separator 23 and the electrode plate more uniform, which is conducive to more stable bonding of the electrode plate and the separator 23.

It should be noted that, on the same surface of the separator 23, the adhesive 241 may extend continuously in the width direction of the separator 23, or may be distributed discontinuously in the width direction of the separator 23.

Of course, in other embodiments, the adhesive 241 may bond the long edge of the electrode plate and the separator 23.

In some embodiments, the width of the adhesive 241 is a first width W1, the width of the electrode plate bonded to the separator 23 is a second width W2, and the ratio of the first width W1 to the second width W2 is in the range of 0.5-1 (0.5≤W1/W2≤1). For example, the ratio W1/W2 of the first width W1 to the second width W2 may be 0.5, 0.6, 0.7, 0.8, 0.9, or 1. In this way, the adhesive 241 occupies a larger portion in the width of the electrode plate, and the width of the adhesive 241 bonding the separator 23 and the electrode plate is larger, which is conducive to stable bonding of the electrode plate and the separator 23 by the adhesive 241.

In one example, the ratio of the width of the adhesive 241 to the width of the first electrode 21 is in the range of 0.5-1. In another example, the ratio of the width of the adhesive 241 to the width of the second electrode 22 is in the range of 0.5-1.

It should be noted that, when there are a plurality of adhesives 241, the ratios of the widths of different adhesives 241 to the width of the electrode plate may be the same or different.

Referring to FIG. 5, in some embodiments, in the length direction of the electrode plate bonded to the separator 23, the length of the adhesive 241 is in the range of 2 mm - 100 mm (0.5≤L≤1). For example, the length L of the adhesive 241 may be 2 mm, 10 mm, 20 mm, 50 mm, 80 mm, 100 mm, etc. As discussed above, the electrode plate is wound in its own length direction, therefore, if the adhesive 241 is wound into a curved state, the length of the adhesive 241 is the size in the unwound state.

In this way, when the length L of the adhesive 241 is within the above range, the bonding force formed by the adhesive 241 can stably bond the electrode plate and the separator 23, and the area of the separator 23 blocked is small, which has little effect on the chemical reaction between the first electrode plate 21 and the second electrode plate 22.

It should be noted that, when there are a plurality of adhesives 241, the lengths of different adhesives 241 may be the same or different.

Referring to FIG. 5, in some embodiments, the thickness H of the adhesive 241 is less than 20 µm. For example, the thickness H of the adhesive 241 may be 19 µm, 15 µm, 10 µm, 8 µm, 5 µm, etc. In this way, when the bonding force of the adhesive 241 is sufficient, the thickness of the adhesive 241 is small, which has little effect on the air permeability of the separator 23, and thus has little effect on the chemical reaction between the first electrode plate 21 and the second electrode plate 22. In addition, the thickness of the adhesive 241 has little effect on the deformation degree of the electrode plate or the separator 23, so that the electrode assembly 20 can be used normally.

In some embodiments, the electrode plate bonded to the separator 23 comprises a current collector 211 and a coating layer 212, the coating layer 212 is stacked on the current collector 211, a starting end and/or an ending end of the winding of the coating layer 212 form grooves 213 away from the current collector 211, and the adhesive 241 is at least partially accommodated in the groove 213.

Specifically, the groove 213 may be a rectangular groove 213, an arc-shaped groove 213, or grooves 213 in other shapes. The groove 213 may communicate the length edge and the width edge of the coating layer 212. The depth of the groove 213 may be 0.3-0.8 times the thickness of the coating layer 212. When the groove 213 is deep enough, the adhesive 241 can be completely accommodated in the groove 213.

To sum up, the adhesive 241 is at least partially accommodated in the groove 213, so that the surfaces of the starting end 201 and the ending end 202 of the winding of the electrode assembly 20 are relatively smooth, thereby reducing the probability of interference between the electrode assembly 20 and other components.

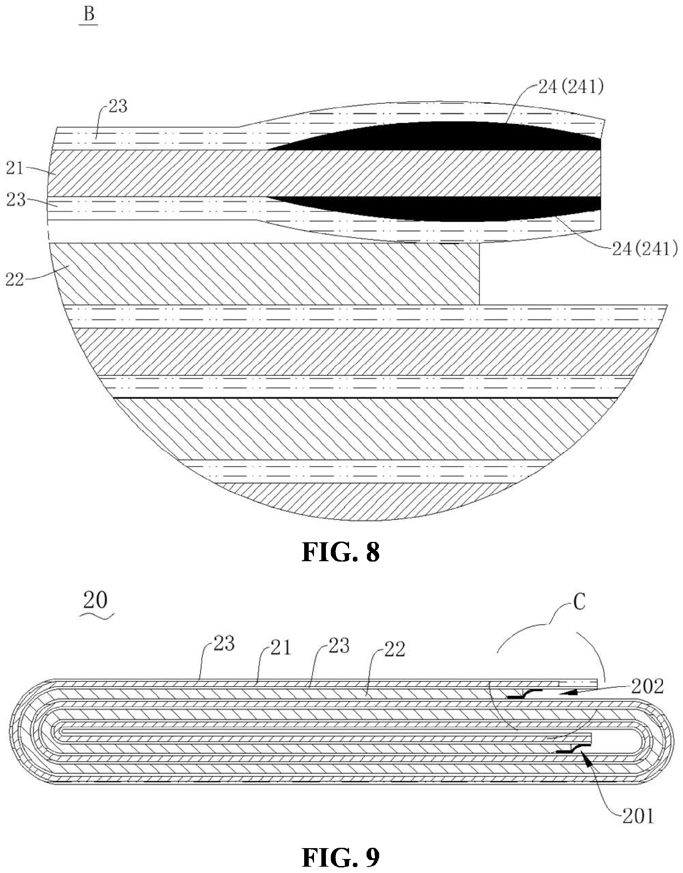

Referring to FIG. 7 and FIG. 8, in some embodiments, the groove may be omitted. In this case, the adhesive 241 may cause the separator 23 to protrude slightly, but such protrusion will not affect the normal use of the electrode assembly 20.

In some embodiments, the number of the separators 23 is two, and one of the first electrode plate 21 and the second electrode plate 22 is clamped between the two separators 23. At the starting end 201 and/or the ending end 202 of the winding of the electrode assembly 20, the two separators 23 are both fixed to the clamped electrode plate by means of the connector 24.

In one example, the first electrode plate 21 is clamped between two separators 23, and at the starting end 201 and the ending end 202 of the electrode assembly 20, the two separators 23 are fixed to the first electrode plate 21 by means of the adhesive 241. In another example, the second electrode plate 22 is clamped between two separators 23, and at the starting end 201 and the ending end 202 of the electrode assembly 20, the two separators 23 are fixed to the second electrode plate 22 by means of the adhesive 241.

In this way, the two separators 23 are both fixed to the clamped electrode plate by means of the connector 24, which can further stabilize the relative position of the clamped electrode plate and the separator 23, reducing the risk of short circuit between the first electrode plate 21 and the second electrode plate 22.

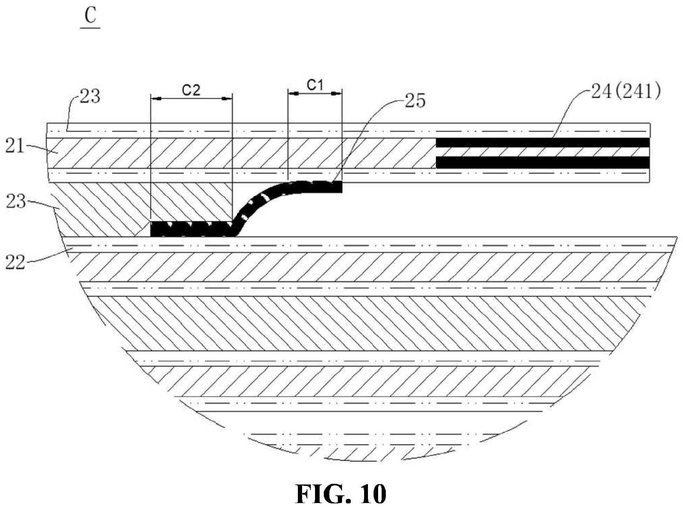

Referring to FIGS. 9 and 10, in some embodiments, the electrode assembly 20 comprises an adhesive tape 25, and at the starting end 201 and/or the ending end 202 of the winding of the electrode assembly 20, the electrode plate other than the clamped electrode plate is connected to the adjacent separator by means of the adhesive tape 25.

In one example, the first electrode plate 21 is clamped between two separators 23, at the starting end 201 and the ending end 202 of the electrode assembly 20, the two separators 23 are fixed to the first electrode plate 21 by the adhesive 241, one end of the adhesive tape 25 is bonded to the end of the second electrode plate 22, and the other end is connected to the end of the adjacent separator 23.

It can be understood that in the first electrode plate 21 and the second electrode plate 22, the positive projection of one electrode plate on the other electrode plate is completely within the outline of the other electrode plate, so that lithium ions can be completely attached to the other electrode plate as they flow. Therefore, the relative position of the two electrode plates is extremely important.

Exemplarily, during the manufacturing process of the electrode assembly 200, the first electrode plate 21, the second electrode plate 22 and the two separators 23 can be flattened first, and the corresponding winding ends and ending ends can be fixed first, and then wound, so that the first electrode plate 21, the second electrode plate 22 and the two separators 23 will not undergo positional deviation during the winding process, thereby improving the qualified rate of the electrode assembly 20.

In this way, the position of the electrode plate other than the clamped electrode plate can be fixed, so that the positions of the two electrode plates are accurate, the phenomenon of lithium precipitation in the electrode assembly 20 is reduced, and the safety of the electrode assembly 20 is improved.

Referring to FIG. 10, in some embodiments, along the winding path of the electrode assembly 20, the connection length between the adhesive tape 25 and the electrode plate is in the range of 3 mm - 20 mm. For example, the connection length C1 between the adhesive tape 25 and the electrode plate is 3 mm, 5 mm, 12 mm, 16 mm, 20 mm, etc. In this way, the connection between the adhesive tape 25 and the electrode plate is relatively stable.

Referring to FIG. 10, in some embodiments, along the winding path of the electrode assembly 20, the connection length between the adhesive tape 25 and the separator 23 is in the range of 3 mm - 40 mm. For example, the connection length C2 between the adhesive tape 25 and the electrode plate is 3 mm, 15 mm, 20 mm, 30 mm, 40 mm, etc. In this way, the connection between the adhesive tape 25 and the separator 23 is relatively stable.

In some embodiments, the adhesive tape 25 is embedded in a recess formed on the surface of the separator 23, so that the structure of the adhesive tape 25 matched with the separator 23 is more compact.

In some embodiments, the thickness of the adhesive tape 25 is in the range of 0.2 mm - 1 mm. For example, the thickness of the adhesive tape 25 is in the range of 0.2 mm, 0.5 mm, 0.6 mm, 0.8 mm, 1 mm, and the like. In this way, the adhesive tape 25 has sufficient strength and is not easily broken.

In the description, the explanation with reference to the terms such as "an embodiment", "some embodiments", "exemplary embodiments", "examples", "specific examples", or "some examples" means that the specific features, structures, materials, or characteristics described in combination with the embodiment(s) or example(s) are included in at least one embodiment or example of the present application. In the description, the illustrative expressions of the above-mentioned terms are not necessarily referring to the same embodiment or example. Moreover, the specific features, structures, materials or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application, and the scope of the present application is defined by the claims and their equivalents.

## Claims

1. An electrode assembly, comprising:
a first electrode plate;
a second electrode plate, the second electrode plate being stacked with the first electrode plate in a thickness direction of the first electrode plate, and the polarity of the second electrode plate being opposite to that of the first electrode plate;
a separator, the separator isolating the first electrode plate from the second electrode plate and being stacked with the first electrode plate in the thickness direction of the first electrode plate;
wherein the separator, the first electrode plate and the second electrode plate are wound to form a whole, and at a starting end and/or an ending end of the winding of the electrode assembly, at least one of the first electrode plate and the second electrode plate is fixed to the separator by means of a connector.

2. The electrode assembly according to claim 1, wherein the connector comprises an adhesive, and at least one of the first electrode plate and the second electrode plate is fixed to the separator by means of the adhesive.

3. The electrode assembly according to claim 2, wherein the adhesive bonds the first electrode plate and the separator in a thickness direction of the separator, and/or the adhesive bonds the second electrode plate and the separator in the thickness direction of the separator.

4. The electrode assembly according to claim 3, wherein the adhesive is symmetrically arranged about the center in the width direction of the electrode plate bonded to the separator.

5. The electrode assembly according to claim 4, wherein the width of the adhesive is a first width, the width of the electrode plate bonded to the separator is a second width, and the ratio of the first width to the second width is in the range of 0.5-1.

6. The electrode assembly according to claim 3, wherein in the length direction of the electrode plate bonded to the separator, the length of the adhesive is in the range of 2 mm - 100 mm.

7. The electrode assembly according to claim 3, wherein the thickness of the adhesive is less than 20 µm.

8. The electrode assembly according to claim 3, wherein the electrode plate bonded to the separator comprises a current collector and a coating layer, the coating layer is stacked on the current collector, a starting end and/or an ending end of the winding of the coating layer form a groove away from the current collector, and the adhesive is at least partially accommodated in the groove.

9. The electrode assembly according to claim 1, wherein the number of the separators is two, one of the first electrode plate and the second electrode plate is clamped between the two separators, and at the starting end and/or the ending end of the winding of the electrode assembly, the two separators are both fixed to the clamped electrode plate by means of the connector.

10. The electrode assembly according to claim 9, wherein the electrode assembly comprises an adhesive tape, and at the starting end and/or the ending end of the winding of the electrode assembly, the electrode plate other than the clamped electrode plate is connected to the adjacent separator by means of the adhesive tape.

11. A battery cell, comprising the electrode assembly according to any one of claims 1 to 10.

12. A battery, comprising a plurality of battery cells according to claim 11.

13. An electrical device, comprising the battery cell according to claim 11 or the battery according to claim 12.
